# EUROPEAN PATENT SPECIFICATION

(11) **EP 1 474 004 B1**
(45) Date of publication and mention of the grant of the patent: **24.10.2007**
(21) Application number: 02710562.6
(22) Date of filing: 25.01.2002
(51) Int. Cl.: A23C 19/09, A23C 19/14, A23C 19/086

(54) **METHOD FOR PREPARING CHEESE PRODUCTS AND CHEESE PRODUCT OBTAINABLE ACCORDING TO SAID METHOD**
VERFAHREN ZUR HERSTELLUNG VON KÄSEERZEUGNISSEN UND DANACH ERHÄLTLICHE KÄSEERZEUGNISSE
PROCÉDÉ POUR PRÉPARER DES PRODUITS FROMAGERS ET PRODUITS FROMAGERS SUSCEPTIBLES D'ÊTRE OBTENUS D'APRÈS CE PROCÉDÉ

(43) Date of publication of application: 10.11.2004
(73) Proprietor: Jeffry, Raymond, Steve, Delhaye, 5701 HC Helmond (NL)
(72) Inventor: Jeffry, Raymond, Steve, Delhaye, 5701 HC Helmond (NL)
(74) Representative: Valkonet, Rutger
(86) International application number: PCT/NL2002/000057
(87) International publication number: WO 2003/061394

(56) References cited:
- WO-A-96/02153
- DE-A- 19 541 205
- FR-A- 2 750 015
- US-A- 4 803 090
- US-A- 5 165 948
- US-A- 5 795 613

## Description

The invention relates to a method for preparing cheese products by subjecting cheese to a heat treatment. Such methods are known in all kinds of variations. A very well-known example is the production of grated cheese, which can serve as a sandwich filling or, for example, as a topping on products to be heated in the oven, such as pizzas. The shelf life of grated cheese is limited to one week or a few weeks, depending on the way it is packaged. Other well-known cheese products are cheese biscuits or cheese snacks, in which cheese is merely an ingredient. A persistent market requirement has resulted in an ongoing search for new cheese products, for example products which have a long shelf life and which can be stored without refrigeration. FR-A-2 750 015 discloses a process for the production of snacks on cheese basis by microwave treatment under vacuum at less than 40°C, preferably at 20-40°C, preferably preceded by a thermal treatment at 38-45°C for 2-3 minutes and cooling.

The object of the method according to the invention is to supply this need. In order to accomplish that objective, the method according to the appended claims is used.

By using the method according to the invention, an airy, crispy, slightly star-shaped cheese product is obtained. This cheese product lends itself very well for being used as a sandwich filling, for example, and it is characterised by a longer shelf life in comparison with the grated cheese. In addition, the product has a long shelf life, even without being refrigerated and without the tastes, the colour and the texture undergoing any changes. Example of cheese types having a fat content of at least 30 percent are matured Gouda 48+, extra matured Gouda 48+, 01d Amsterdam, old matured Gouda and Leerdam cheese.

The shelf life of the product is extended even further by step c)viz. the drying of the cheese parts between step a) and step b). Even more surprising, however, is the fact that the dried cheese parts tend to pop during the microwave treatment, i.e. the cheese parts become detached from their supporting surface spontaneously, thereby undergoing a volume increase by, for example, a factor of two. In that sense the popping of the cheese parts can be compared with the well-known popping of corn grains. The resulting cheese products are very airy and crunchy, and they have fully retained their specific cheese taste. The cheese products can readily be strewn and they will keep well for a prolonged period of time without refrigeration, even after the package in which they may be present has been opened. The product lends itself for all kinds of uses, for example on bread, in soups, on pastas and on salads. If desired, the taste can be further varied by using suitable additives. As a result of said popping, the product will undergo a volume increase, for example to such an extent that it is possible to produce sufficient cheese product to fill two sandwiches from an amount of cheese that corresponds to the amount of cheese slices that is according to accepted standards required to fill one sandwich. The filling degree increases by a factor of two, therefore.

A drying temperature of maximally 20°C is used in step c) whilst a forced air circulation takes place round the cheese parts to be dried, preferably for a period of 3 to 7 hours. Higher drying temperatures cause the fat to migrate out of the cheese, which phenomenon is also referred to as "sweating". As a result, popping will be more difficult.

In the absence of a forced air a circulation round the cheese parts to be dried, step c) is carried out at a maximum temperature of 12 °C, preferably for a period of 14 to 20 hours. When the drying time is too short, the composition of the cheese parts will remain too homogeneous across their section. On the other and, when the drying time is too long, the relatively dry skin of the cheese parts will become too thick, as a result of which popping will be more difficult.

Preferably, the main dimensions of the cheese parts range between 2 and 8 mm, or even more preferably between 2.5 and 6 mm. If the main dimensions are too small, and also if they are too great, popping will be more difficult. In the case of main dimensions which are too small, this is caused by the fact that the drying step no longer results in a clear difference as regards composition and texture between the outer skin of the cheese parts and the core of the cheese parts that is present within said skin. In order to make popping possible, the outer skin must have a specific thickness, which thickness is no longer available when the main dimensions are too small. If the main dimensions are too great, the dried cheese parts will melt rather than pop in the microwave. It has become apparent that popping becomes easier as the main dimensions are more uniform. Consequently, the cheese parts obtained in step a) preferably have the shape of a cube or a sphere.

Especially suitable as a basic product for making the cheese parts poppable is a solid cheese having a fat content of at least 45%. When such a basic product is used, the drying process will result in a core part of the cheese within the skin which is relatively soft in comparison with the outer skin. Owing to the difference as regards the mechanical characteristics between the skin and the core, and in view of the fact that heating of the cheese parts takes place from the inside, which is typical of a microwave, the core will become hotter than the skin and exhibit signs of boiling, with a pressure build-up taking place until the relatively crispy skin bursts open.

Furthermore, the cheese parts are preferably present on a surface which does not adhere to the cheese parts, for example a siliconised surface, such as a baking paper, during the microwave treatment, as a result of which the cheese parts are easier to pop. Filter paper, glass, plastic and ceramic materials, for example, can be used as substrate materials for said siliconisation.

The invention will be explained in more detail hereafter by means of non-limitative examples comprising a description of experiments.

The following experiments were carried out:

### Example 1 (not according to the invention)

A block of matured Gouda having a fat content of 48% was divided into cube-like blocks having ribs of 3 mm and a joint weight of about 1.0 g. Immediately thereafter, said cheese parts were subjected to a microwave treatment, using a household microwave and an output of 800 Watt, for a period of 120 seconds. The cheese parts underwent a transformation in the sense that they became airy and crispy, whilst in addition their volume increased. On average, the dimensions of the cheese parts had increased to 6x6x1½ mm.

### Example 2

In the next series of experiments, a block of matured Gouda having a fat content of 48% was again divided into cube-like parts having ribs of 3 mm and a joint weight of about 1.0 g. Said cheese parts were dried at an ambient temperature of 16° C for five hours, during which period a forced air circulation was effected round the cheese parts by means of a fan. The dried cheese parts underwent a microwave treatment with an output setting of 800 Watt. After one minute the cheese parts started popping, i.e. they became detached from their glassy supporting surface while undergoing a significant volume increase. The average dimensions of the popped cheese parts was 6x6x4½ mm.

### Example 3

The experiment as described in example 2 was carried out, with this difference that an output of 400 Watt was used, which resulted in the cheese parts popping after 2 minutes.

### Example 4

The experiment as described in example 2 was carried out once again, with this understanding that the cheese parts were present on a siliconised glass surface during the microwave treatment. It appeared that the adherence of the cheese parts to the supporting surface decreased, which made popping easier.

### Comparative example 1

Dried cube-shaped cheese parts having an original fat content of 48% and ribs of 5 mm, which were present on baking paper, were halved and subsequently subjected to a microwave treatment. Hardly if any popping effects occurred, the cheese parts only appeared to melt. An explanation for this phenomenon can be found in the fact that the relatively hard outer skin of the cheese parts was opened by said halving, as a result of which a pressure buildup within the skin could not take place any more.

### Comparative example 2

When cheese parts having a main dimension of less than 1 mm were used, this likewise resulted in cheese parts which appeared to be hardly poppable, if at all. Cheese parts having a main dimension of more than 10 mm, appeared to melt in large part rather than to pop during the microwave treatment. The use of too high drying temperatures finally resulted in the fat migrating out of the cheese parts, as a result of which popping of the cheese parts likewise became more difficult.

## Claims

1. A method for preparing cheese products by subjecting cheese to a heat treatment, comprising the steps of
a) separating cheese parts having main dimensions between 1 mm and 10 mm from a solid cheese having a fat content of at least 30%, and
b) subjecting the cheese parts obtained in step a) to a microwave treatment so as to form an airy cheese product;
**characterised by** carrying out a step c), viz. the drying of the cheese parts obtained in step a), between step a) and step b) wherein a drying temperature of maximally 20°C is used in step c) whilst a forced air circulation takes place round the cheese parts to be dried.

2. A method according to claim 1, **characterised in that** the drying in step c) takes place for a period of 3 to 7 hours.

3. A method for preparing cheese products by subjecting cheese to a heat treatment, comprising the steps of
a) separating cheese parts having main dimensions between 1 mm and 10 mm from a solid cheese having a fat content of at least 30%, and
b) subjecting the cheese parts obtained in step a) to a microwave treatment so as to form an airy cheese product;
**characterised by** carrying out a step c), viz. the drying of the cheese parts obtained in step a), between step a) and step b) wherein a drying temperature of maximally 12°C is used in step c) in the absence of a forced air circulation round the cheese parts to be dried.

4. A method according to claim 3, **characterised in that** the drying in step c) takes place for a period of 14 to 20 hours.

5. A method according to any one of the preceding claims, **characterised in that** step a) comprises the separation of cheese parts having main dimensions ranging between 2 and 8 mm, preferably between 2.5 and 6 mm.

6. A method according to any one of the preceding claims, **characterised in that** step a) comprises the separation of cheese parts whose main dimensions maximally vary by a factor of 2.

7. A method according to any one of the preceding claims,
**characterised in that** step a) comprises the separation of cheese parts having substantially the same main dimensions.

8. A method according to claim 7, **characterised in that** step a) comprises the separation of cube-shaped cheese parts.

9. A method according to any one of the preceding claims, **characterised in that** the solid cheese has a fat content of at least 45%.

10. A method according to any one of the preceding claims, **characterised in that** in step b) the cheese parts are present on a surface which does not adhere to the cheese parts.

11. A method according to any one of the preceding claims, **characterised in that** the cheese parts are present on a siliconised surface in step b).

12. A method according to claim 11, **characterised in that** said siliconised surface is baking paper.

13. The cheese product obtainable in accordance with the method defined in any one of the preceding claims.

14. A cheese product according to claim 13, provided with a package enveloping an amount of cheese product

## Patentansprüche

1. Verfahren zum Herstellen von Käseprodukten, indem Käse einer Wärmebehandlung unterzogen wird, beinhaltend die Schritte
a) Trennen von Käseteilen, die Hauptabmessungen zwischen 1 mm und 10 mm haben, von einem massiven Käse, der einen Fettgehalt von wenigstens 30% hat, und
b) Unterziehen der Käseteile, die in dem Schritt a) erzielt werden, einer Mikrowellenbehandlung, um so ein luftiges Käseprodukt zu bilden; **gekennzeichnet durch** Ausführen eines Schrittes c), nämlich Trocknen der in dem Schritt a) erhaltenen Käseteile zwischen dem Schritt a) und dem Schritt b), wobei eine Trocknungstemperatur von maximal 20 °C in dem Schritt c) verwendet wird, während eine Zwangsluftumwälzung um die zu trocknenden Käseteile stattfindet.

2. Verfahren nach Anspruch 1, **dadurch gekennzeichnet, dass** das Trocknen in dem Schritt c) für eine Zeitspanne von 3 bis 7 Stunden erfolgt.

3. Verfahren zum Herstellen von Käseprodukten, indem Käse einer Wärmebehandlung unterzogen wird, beinhaltend die Schritte
a) Trennen von Käseteilen, die Hauptabmessungen zwischen 1 mm und 10 mm haben, von einem massiven Käse, der einen Fettgehalt von wenigstens 30% hat, und
b) Unterziehen der in dem Schritt a) gewonnenen Käseteile einer Mikrowellenbehandlung, um so ein luftiges Käseprodukt zu bilden;
**gekennzeichnet durch** Ausführen eines Schrittes c), nämlich Trocknen der in dem Schritt a) gewonnenen Käseteile zwischen dem Schritt a) und dem Schritt b), wobei eine Trocknungstemperatur von maximal 12 °C in dem Schritt c) in Abwesenheit einer Zwangsluftumwälzung um die zu trocknenden Käseteile verwendet wird.

4. Verfahren nach Anspruch 3, **dadurch gekennzeichnet, dass** das Trocknen in dem Schritt c) für eine Zeitspanne von 14 bis 20 Stunden stattfindet.

5. Verfahren nach einem der vorhergehenden Ansprüche, **dadurch gekennzeichnet, dass** der Schritt a) die Trennung von Käseteilen beinhaltet, die Hauptabmessungen haben, welche in einem Bereich zwischen 2 und 8 mm, vorzugsweise zwischen 2,5 und 6 mm liegen.

6. Verfahren nach einem der vorhergehenden Ansprüche, **dadurch gekennzeichnet, dass** der Schritt a) die Trennung von Käseteilen beinhaltet, deren Hauptabmessungen maximal um einen Faktor 2 variieren.

7. Verfahren nach einem der vorhergehenden Ansprüche, **dadurch gekennzeichnet, dass** der Schritt a) die Trennung der Käseteile beinhaltet, die im Wesentlichen dieselben Hauptabmessungen haben.

8. Verfahren nach Anspruch 7, **dadurch gekennzeichnet, dass** der Schritt a) die Trennung von würfelförmigen Käseteilen beinhaltet.

9. Verfahren nach einem der vorhergehenden Ansprüche, **dadurch gekennzeichnet, dass** der massive Käse einen Fettgehalt von wenigstens 45% hat.

10. Verfahren nach einem der vorhergehenden Ansprüche, **dadurch gekennzeichnet, dass** in dem Schritt b) die Käseteile auf einer Oberfläche vorhanden sind, die an den Käseteilen nicht haftet.

11. Verfahren nach einem der vorhergehenden Ansprüche, **dadurch gekennzeichnet, dass** die Käseteile auf einer siliconisierten Oberfläche in dem Schritt b) vorhanden sind.

12. Verfahren nach Anspruch 11, **dadurch gekennzeichnet, dass** die siliconisierte Oberfläche Backpapier ist.

13. Käseprodukt, erhältlich durch das Verfahren nach einem der vorhergehenden Ansprüche.

14. Käseprodukt nach Anspruch 13, versehen mit einer Verpackung, die eine Käseproduktmenge umhüllt.

## Revendications

1. Procédé pour préparer des produits fromagers en soumettant le fromage à un traitement thermique, comprenant les étapes consistant à :
a) séparer des parties de fromage présentant des dimensions principales comprises entre 1 mm et 10 mm à partir d'un fromage entier ayant une teneur en matière grasse d'au moins 30%, et
b) soumettre les parties de fromage obtenues dans l'étape a) à un traitement par micro-ondes de façon à former un produit fromager bien aéré ;
**caractérisé par** la réalisation d'une étape c), à savoir, sécher les parties de fromage obtenues dans l'étape a), entre l'étape a) et l'étape b), dans laquelle une température de séchage de 20°C au maximum est utilisée dans l'étape c) tandis qu'une circulation d'air forcée est produite autour des parties de fromage à sécher.

2. Procédé selon la revendication 1, **caractérisé en ce que** le séchage à l'étape c) est exécuté pendant une période de 3 à 7 heures.

3. Procédé pour préparer des produits fromagers en soumettant un fromage à un traitement thermique, comportant les étapes consistant à
a) séparer des parties de fromage présentant des dimensions principales comprises entre 1 mm et 10 mm à partir d'un fromage entier ayant une teneur en matière grasse d'au moins 30% et
b) soumettre les parties de fromage obtenues à l'étape a) à un traitement par micro-ondes de façon à former un produit fromager bien aéré ;
**caractérisé par** la réalisation d'une étape c), à savoir, le séchage des parties de fromage obtenues dans l'étape a), entre l'étape a) et l'étape b), dans laquelle une température de séchage de 12°C au maximum est utilisée dans l'étape c) en l'absence de circulation d'air forcée autour des parties de fromage à sécher.

4. Procédé selon la revendication 3 **caractérisé en ce que** le séchage de l'étape c) se produit pendant une période de 14 à 20 heures.

5. Procédé selon l'une quelconque des revendications précédentes, **caractérisé en ce que** l'étape a) comporte la séparation des parties de fromage présentant des dimensions principales se situant entre 2 et 8 mm, de préférence, entre 2,5 et 6 mm.

6. Procédé selon l'une quelconque des revendications précédentes, **caractérisé en ce que** l'étape a) comporte la séparation des parties de fromage dont les dimensions principales varient au maximum d'un facteur de 2.

7. Procédé selon l'une quelconque des revendications précédentes, **caractérisé en ce que** l'étape a) comporte la séparation des parties de fromages présentant essentiellement les mêmes dimensions principales.

8. Procédé selon la revendication 7, **caractérisé en ce que** l'étape a) comprend la séparation de parties de fromage configurées en forme de cube.

9. Procédé selon l'une quelconque des revendications précédentes, **caractérisé en ce que** le fromage entier possède une teneur en matière grasse d'au moins 45%.

10. Procédé selon l'une quelconque des revendications précédentes, **caractérisé en ce que** dans l'étape b) les parties de fromage sont présentes sur une surface qui n'adhère pas aux parties de fromage.

11. Procédé selon l'une quelconque des revendications précédentes, **caractérisé en ce que** les parties de fromage sont présentes sur une surface traitée au silicone à l'étape b).

12. Procédé selon la revendication 11, **caractérisé en ce que** ladite surface traitée au silicone est du papier pour cuisson.

13. Produit fromager pouvant être obtenu selon le procédé défini dans l'une quelconque des revendications précédentes.

14. Produit fromager selon la revendication 13, pourvu d'un emballage enveloppant une quantité de produit fromager.
